Europäisches Patentamt

European Patent Office

Office européen des brevets

(11) Publication number: **0 215 569**

**A1**

# EUROPEAN PATENT APPLICATION

(21) Application number: 86306147.9

(22) Date of filing: 08.08.86

(51) Int. Cl.⁴ **C08L 77/00** , **C08F 291/02** , **C09J 3/12**

(30) Priority: 20.08.85 GB 8520842

(43) Date of publication of application: 25.03.87 Bulletin 87/13

(84) Designated Contracting States: BE CH DE FR IT LI NL SE

(71) Applicant: **BIP CHEMICALS LIMITED**
**20 St. Mary's Parsonage**
**Manchester M3 2NL(GB)**

(72) Inventor: **Williams, Richard Steuart**
**201 Pennine Road**
**Bromsgrove West Midlands(GB)**

(74) Representative: **Newman, Dennis Daniel Ernest et al**
**Trafford Park P.O. Box 20 Ashburton Road West**
**Manchester, M17 1RA(GB)**

(54) **Thermoplastic polyamide compositions.**

(57) A thermoplastic polyamide composition, comprising nylon 6 (polycaprolactam) and an impact-resistance improver which is a multi-phase acrylic polymer consisting of an elastomeric core with a glass transition temperature less than 25°C and a rigid thermoplastic shell with a glass transition temperature greater than 50°C and containing amine-reactive carboxylic acid groups, additionally includes a second elastomeric component (a methacrylated butadiene-styrene copolymer or an all-acrylic elastomer), having a glass transition temperature below 0°C, the proportions of the ingredients being (by weight of the total thermoplastic polymer material present):

    a. nylon 6 not less than 65%
    b. multi-phase acrylic polymer 2-25%
    c. second elastomeric component 3-33%

On being moulded such compositions give articles having an unexpectedly high resistance to impact.

## Thermoplastic polyamide compositions

This invention relates to thermoplastic polyamide compositions, and more particularly to those having a basis of the polyamide nylon 6, which contains the characteristic unit $-(NH-(CH_2)_5 - CO)_m-$.

Articles moulded from this polyamide are hygroscopic, and gradually take up moisture from the atmosphere until equilibrium is reached. This uptake of water improves the impact resistance of the article, and moulders often condition mouldings in hot water so that they can supply customers with articles which have developed a desirable toughness. In recent years there have become available impact resistance improvers for nylon 6 in accordance with British Patent 1 368 628 of Rohm and Haas Co. These improvers are multi-phase acrylic polymers consisting of an elastomeric core with a glass transition temperature less than 25°C and a rigid thermoplastic shell with a glass transition temperature greater than 50°C and containing amine-reactive carboxylic acid groups. Such polymers, typical of which is that available under the trade mark PARALOID KR 725, can be prepared by sequential emulsion polymerisation: first, a mixture of a major amount of butyl acrylate, a minor (but still substantial) proportion of styrene, and minor amounts of 1, 3-butylene diacrylate or dimethacrylate is emulsion-polymerised to form seed particles of elastomeric phase, and onto these particles is grafted by emulsion polymerisation a rigid phase, typically of a copolymer of methyl methacrylate and acrylic acid. To prepare a moulding composition, the multi-phase acrylic polymer is mixed with nylon 6, usually in an amount forming 8-10% by weight but permissibly up to 25% by weight of the mixture, and the mixture is extruded at elevated temperature, in the region of 270-280°C.

We have now found that mouldings of unexpectedly high impact resistance can be obtained by additionally including in the mixture a second elastomer, having a glass transition temperature below 0°C and being a methacrylated butadiene-styrene copolymer or an all-acrylic elastomer. The second elastomeric component forms a separate phase on cooling from a mixed melt with the nylon 6 and the polar groups present in it produce good adhesion between that separate phase and the nylon phase.

The proportions, by weight of the total thermoplastic polymeric material present, are as follows:-

a. nylon 6 not less than 65%

b. multi-phase acrylic polymer 2-25%

c. second elastomeric component 3-33%

Preferably, the weight proportions (a), (b) and (c) are respectively in the ranges 70-90%, 2-10% and 8-25%.

Examples of materials which may be used as the second elastomeric component are:-

(i) All-acrylic elastomers such as those marketed specifically for improving the impact resistance of PVC mouldings eg those available from Rohm and Haas Co under the numbers KM323B, KM330, KM334 and KM3303 of the PARALOID series.

(ii) The methacrylated butadiene-styrene copolymers marketed specifically for improving the impact resistance of PVC mouldings eg those available from Rohm and Haas Co under the numbers KM611, KM522, KM608A, KM641 and KM653 of the PARALOID series, and those available from Borg-Warner Chemicals under the name BLENDEX BTA (trade Mark) eg BTA III 436.

Ingredients other than the thermoplastic materials may be present in the compositions of the invention, such as pigments, reinforcing materials - (for example: glass fibres, carbon fibres), non-fibrous mineral fillers, flame retardants, anti-oxidants, heat-and light-stabilisers, plasticisers, mould lubricants and nucleants for crystallisation; the proportion of such materials will ordinarily not be greater than 50% by weight of the whole.

The invention is further illustrated by the following examples:-

Examples 1 to 10, and A, B & C (Comparative)

Nylon 6 (polycaprolactam) available from BIP Chemicals Ltd under the designation MD1 (medium melt viscosity grade) was mixed in the weight proportions shown below with multi-phase acrylic polymer PARALOID KR 725 (Rohm and Haas Co) and/or methacrylated butadiene-styrene copolymer PARALOID KM 653 (Rohm and Haas). Each mixture was extruded in a Werner & Pfleiderer ZSK 30 extruder at a barrel temperature of 270°C, and the extrudates were cut into pellets. These were then vacuum-dried at 80°C for 16 hours and injection-moulded in a BIPEL 70/31 injection moulding machine [barrel temperature: 250°C (feed) -270°C - (nozzle); mould temperature, 40-80°C] to form test-pieces whose impact strengths were measured, with the results shown below.

Example A

| Parts Wt Nylon 6 | 100 | 95 | 90 | 85 | 80 | 75 |
|---|---|---|---|---|---|---|
| Parts Wt KR725 | 0 | 5 | 10 | 15 | 20 | 25 |

| Impact Strength *Charpy | | | | | | |
|---|---|---|---|---|---|---|
| Edge notched $KJ/m^2$ | 7 | 13 | 21 | 20 | 20 | 18 |
| Face notched $KJ/m^2$ | 18 | 29 | 35 | 32 | 30 | 26 |
| Izod    J/M | 70 | 160 | 373 | 183 | 260 | 256 |

*Test Specimen:110 x 10 x 4 mm. Edge:notched to leave
8 mm under notcn
Face:notched to leave
3.2 mm under notch

Example No

| | B | 1 | 2 | 3 | 4 | 5 |
|---|---|---|---|---|---|---|
| Parts Wt Nylon 6 | 80 | 80 | 80 | 80 | 80 | 80 |
| Parts Wt KR725 | 0 | 2 | 4 | 6 | 8 | 10 |
| Parts Wt KM653 | 20 | 18 | 16 | 14 | 12 | 10 |

| Impact Strength Charpy | | | | | | |
|---|---|---|---|---|---|---|
| Edge notched $KJ/m^2$ | 19 | 103 | 105 | 88 | 28 | 25 |
| Face notched $KJ/m^2$ | 33 | 39 | 54 | 43 | 43 | 44 |
| Izod    J/M | 182 | 502 | 1323 | F.T. | 226 | 226 |

F.T. = Flexed through(did not break)

Example No

| | C.6. | 7. | 8.9.10 | | | |
|---|---|---|---|---|---|---|
| Parts Wt Nylon 6 | 85 | 85 | 85 | 85 | 85 | 85 |
| Parts Wt KR725 | 0 | 2 | 4 | 6 | 8 | 15 |
| Parts Wt KM653 | 15 | 13 | 11 | 9 | 7 | 0 |

### Charpy Impact Strength

| | | | | | | |
|---|---|---|---|---|---|---|
| Edge notched $KJ/m^2$ | 20 | 26 | 44 | 25 | 22 | 21 |
| Face notched $KJ/m^2$ | 29 | 39 | 36 | 38 | 37 | 32 |

Examples 11 to 17 and D (Comparative)

Nylon 6 was mixed in the weight proportions shown below with multi-phase acrylic polymer PARALOID KR 725 (Rohm and Haas) and/or all-acrylic elastomer PARALOID KM 330 (Rohm and Haas). Following generally the procedures of Examples 1 to 10, each mixture was extruded; the extrudates were cut into pellets, and the pellets were then injection moulded into test pieces whose impact strengths were measured, Results were:-

Example No

| | D | 11 | 12 | 13 | 14 | 15 | 16 | 17 |
|---|---|---|---|---|---|---|---|---|
| Parts Wt Nylon 6 | 80 | 80 | 80 | 80 | 80 | 80 | 80 | 80 |
| Parts Wt KR725 | 0 | 2 | 4 | 6 | 8 | 10 | 12 | 14 |
| Parts Wt KM330 | 20 | 18 | 16 | 14 | 12 | 10 | 8 | 6 |

Impact Strength
### Charpy

| | D | 11 | 12 | 13 | 14 | 15 | 16 | 17 |
|---|---|---|---|---|---|---|---|---|
| Edge-notched $KJ/m^2$ | 17 | 26 | 120 | 123 | 120 | 44 | 84 | 42 |
| Face-notched $KJ/m^2$ | 29 | 43 | 56 | 79 | 76 | 34 | 36 | 32 |
| Izod    J/M | 121 | 194 | FT | FT | FT | 652 | 881 | 647 |

## Claims

1. A thermoplastic polyamide composition comprising nylon 6 and an impact-resistance improver which is a multi-phase acrylic polymer consisting of an elastomeric core with a glass transition temperature less than 25°C and a rigid thermoplastic shell with a glass transition temperature greater than 50°C and containing amine-reactive carboxylic acid groups; said composition additionally including a second elastomeric component, having a glass transition temperature below 0°C and being a methacrylated butadiene-styrene copolymer or an all-acrylic elastomer; the proportions of the ingredients being (by weight of the total thermoplastic polymeric material present):

   a. Nylon 6 not less than 65%
   b. multi-phase acrylic polymer 2-25%
   c. second elastomeric component 3-33%

2. A composition according to Claim 1, in which the weight proportions (a), (b) and (c) are respectively in the ranges 70-90%, 2-10% and 8-25%.

3. A method of making a moulded article resistant to damage by impact, comprising extruding at elevated temperature a composition according to Claim 1, subdividing the extrudate, and moulding the subdivided material at elevated temperature.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 055 890  (MONSTANTO)<br>* Page 3, lines 1-20; claims * | 1-3 | C 08 L   77/00<br>C 08 F 291/02<br>C 09 J   3/12 |
| | --- | | |
| X | EP-A-0 051 471  (MONSTANTO)<br>* Claims * | 1-3 | |
| | --- | | |
| X | EP-A-0 003 126  (ROHM AND HAAS)<br>* Claims * | 1-3 | |
| | ----- | | |

|  | TECHNICAL FIELDS SEARCHED (Int Cl 4) |
|---|---|
|  | C 08 L<br>C 08 F<br>C 09 J |

The present search report has been drawn up for all claims

| Place of search | Date of completion of the search | Examiner |
|---|---|---|
| THE HAGUE | 11-12-1986 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82